# EUROPEAN PATENT APPLICATION

(11) **EP 2 146 234 A1**
(43) Date of publication of application: **20.01.2010**
(21) Application number: 08462010.3
(22) Date of filing: 31.12.2008
(51) Int. Cl.: G02B 21/00

(54) **Laser scanning microscope**

(30) Priority: 17.11.2008 HU 0800686 P; 15.07.2008 HU 0800433 P
(71) Applicant: Femtonics Kft., H-1083 Budapest (HU)
(72) Inventor: Rózsa, Balázs, 1183 Budapest (HU); Katona, Gergely, 1138 Budapest (HU); Vizi, E. Szilveszter, 1121 Budapest (HU)
(74) Representative: Kacsuk, Zsófia

(57) **Abstract**

The present invention relates to a laser scanning microscope (10) for scanning a sample, the microscope having
- focusing means (15) having a focal plane (29) and comprising at least one optical element for focusing a laser beam (13),
- drive means (18) for displacing the at least one optical element of the focusing means (15),
- at least one detector means (24') for detecting light (13') reflected from the sample or back fluoresced light (13') emitted by the sample,

**characterised** by the detector means (24') being connected to the drive means (18) such that the drive means (18) may simultaneously displace the detector means (24') with the at least one optical element of the focusing means (15).

The present invention further relates to a method of performing 3D scanning with the inventive laser scanning microscope.

## Description

The present invention relates to laser scanning reflection or fluorescent microscope for scanning a sample, the microscope having
- focusing means having a focal plane and comprising at least one optical element for focusing a laser beam,
- drive means for displacing the at least one optical element of the focusing means for changing the position of the focal plane,
- at least one detector means for detecting a reflected beam reflected from the sample or back fluoresced light emitted by the sample.

The invention further relates to a method for scanning a sample along a 3D trajectory with the use of the laser scanning microscope according to the invention.

Three-dimensional (3D) laser scanning technologies have great importance in analysing biological specimens e.g. imaging 3D biological structures or mapping fluorescent markers of cell surface receptors on nonplanar surfaces. Even two-dimensional (2D) scanning technologies commonly used for scanning and/or imaging thin specimen slides usually involve depth focusing as well, i.e. the suitable slide-objective distance needs to be found for obtaining a sharp image since the optimal focus position may vary from slide to slide and even within the same specimen slide.

Depth focusing can be carried out by moving the sample stage and the focusing means (typically the objective) of the microscope relative to each other. This is either realised by moving the sample stage e.g. via stepping motors, or by displacing the microscope objective. Moving the sample stage generally allows for much faster Z-scanning (scanning along the optical axis) than displacing the objective since the later involves moving a greater mass, which implies setting the greater mass in motion and stopping it at the desired position.

However moving the stage is complicated to implement when using submerge specimen chambers or when electrical recording is performed on the biological specimen with microelectrodes. Accordingly, in the case of analysing biological specimens it is often preferred to move the focus spot of the laser beam instead of moving the specimen. This can be achieved by deflecting the laser beam to scan different points of a focal plane (XY plane) and for example by displacing the objective along its optical axis (Z axis) e.g. via a piezo-positioner to change the depth of the focal plane.

Scanning/imaging of the sample is performed by detecting the scanning beam reflected back from the specimen or in case of fluorescent microscopy by detecting the back fluoresced light. Suitable detectors and/or imaging devices are well known in the art.

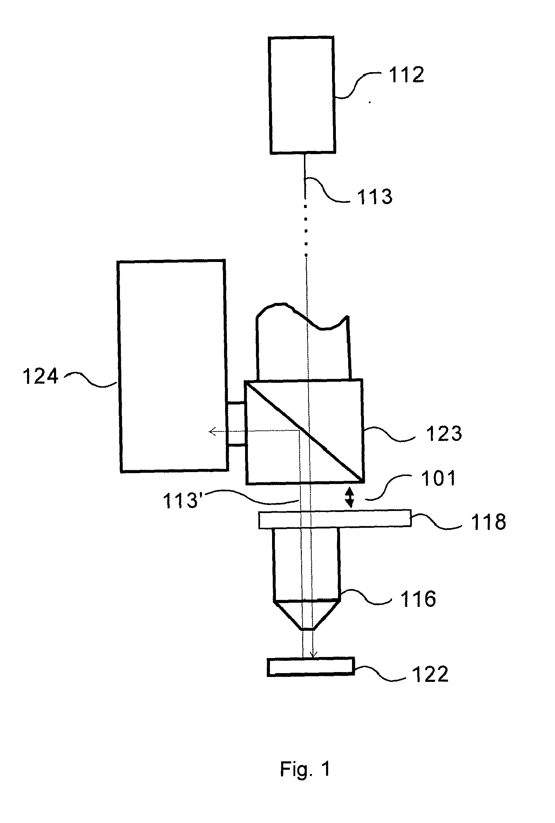

A typical prior art laser scanning microscope construction is illustrated in Fig. 1. As can be seen the laser scanning microscope 100 comprises a laser source 112 providing a laser beam 113 which is focused onto a sample 122 (e.g. a biological specimen) via microscope objective 116. In order to perform depth focusing a drive means 118 is provided for displacing the microscope objective 116 relative to the sample 122. A beam splitter 123 is arranged along the optical path of the scanning laser beam 113 for directing the reflected light 113' (which is understood to comprise both the laser beam reflected back from the sample 122 and the back fluoresced light as the case may be) to a suitable detector 124. In order to move as little mass as possible the detector 124 is in a fixed position and only the objective 116 is displaced by the drive means 118.

The first major drawback of this solution is that the optical distance between the objective 116 and the detector 124 needs to be relatively big, typically a 30-40 mm gap 101 is required between the top of the objective 116 (or the system supporting the objective 116) and the beam splitter 123 in order to be able to lift the objective when arranging the sample 122 on the stage. Such a long optical distance is particularly undesirable in the case of fluorescence microscopy where the scattered nature of the back fluoresced light 113' can lead to high losses along the relatively long optical path.

A second drawback of the prior art solution is associated with the varying optical distance between the objective 116 and the detector 124 when measuring biological specimens arranged at different height and/or when performing depth focusing. This may lead to a fluctuation in the detected light intensity due to the unavoidable scattering of the scanning beam 113 and the reflected light 113' (varying optical distance means varying light intensity loss along the optical path even where the reflected light 113' is a reflected laser beam). Furthermore, optimisation of the detection and/or imaging of the specimen is rendered more complicated if the distance between the objective 116 and the detector 124 is not constant.

It is an object of the present invention to overcome the problems associated with the prior art laser scanning microscopes and to provide a laser scanning microscope wherein the objective-detector distance is minimised and can be kept substantially constant regardless of the shape and height of a specimen to be examined, and optionally in the course of performing depth focusing.

It is a further object of the present invention to provide a 3D laser scanning microscope with the above advantages.

Commonly used 3D laser scanning microscopes are either confocal microscopes or two-photon (or multi-photon) microscopes. In the confocal microscope technology a pinhole is arranged before the detector to filter out light reflected from any other plane than the focus plane of the microscope objective. Thereby it is possible to image planes lying in different depths within a sample (e.g. a biological specimen).

Two-photon laser scanning microscopes use a laser light of lower energy of which two photons are needed to excite a flourophore in a quantum event, resulting in the emission of a fluorescence photon, which is then detected by a detector. The probability of a near simultaneous absorption of two photons is extremely low requiring a high flux of excitation photons, thus two-photon excitation practically only occurs in the focal spot of the laser beam, i.e. a small ellipsoidal volume having typically a size of approximately 300nm x 300nm x 1000nm. Generally a femtosecond pulsed laser is used to provide the required photon flux for the two-photon excitation, while keeping the average laser beam intensity sufficiently low.

In order to decrease the required scanning time the laser beam is preferably deflected by known means to scan different points of a given focal plane (XY plane). Several known technologies exist for deflecting the laser beam prior to it entering the objective, e.g. via deflecting mirrors mounted on galvanometric scanners, or via accousto-optical deflectors.

The galvanometric scanners and the accousto-optical deflectors are very fast devices, hence moving the focus spot to a desired XY plane position and obtaining measurement data via the detector in that position can be carried out in less than 1 ms.

In "Imaging cellular network dynamics in three dimensions using fast 3D laser scanning" (Nature Methods, Vol. 4 No. 1, January 2007) Göbel et al. propose to drive a piezo-positioner of a laser scanning microscope objective with a sinusoidal signal and calculate an appropriate drive signal for the X-Y scanners (galvanometric scan mirrors) to obtain a desired 3D trajectory. The article discusses measurements made at a sinusoidal drive signal of 10 Hz and suggests adjustment of the drive signal to compensate for amplitude reduction and phase shift of the actual objective position with respect to the drive signal of the piezo-positioner.

One of the problems associated with the above method is a deviation from the desired scan trajectory because the movement of the objective deviates from sinusoidal owing to the properties of the piezo-positioner and other mechanical components. This problem is not crucial at low frequencies of the sinusoidal drive signal, such as the 10 Hz frequency used by Göbel et al. However, the deviation becomes more and more important as the frequency is increased.

Being constrained to use low frequencies is less disturbing when scanning a large number of X-Y positions in each scanning plane (i.e. planes lying at different Z depths within the specimen) as the fast XY positioning allows for obtaining a plurality of scans while the focus plane remains substantially in the same Z plane. Thus, effectively, the relatively long time spent in each scanning plane is not wasted as a plurality of measurements can be carried out. On the other hand, when scanning specimens having only a few points of interest in each Z plane, e.g. a nerve cell dendrite crossing such planes, the aim is to spend as little time in each Z plane as possible in order to decrease the overall scan time. Therefore it would be desirable to increase the frequency of the sinusoidal drive signal but as indicated by Göbel et al., such an increase in the frequency would result in a higher deviation between the displacement of the objective and a theoretical sinusoidal displacement corresponding to the sinusoidal drive signal, which could lead to an intolerable deviation from the desired 3D scanning trajectory, effectively the positions of interest within the specimen could be out of focus or could be missed entirely.

It is a second object of the present invention to overcome the above problem and provide a method for decreasing the Z-scanning time when performing depth focusing by moving the whole of the focusing-detecting unit in accordance with the inventive laser scanning microscope construction. It is a further object to provide a scanning method capable of compensating for a deviation between the motion of the focusing-detecting unit connected to a drive means and the drive signal of the drive means.

This object is achieved by a laser scanning reflection or fluorescent microscope for scanning a sample, the microscope comprising a focusing-detecting unit having:
- focusing means having a focal plane and having at least one optical element for focusing a laser beam, and
- detector means for detecting light reflected from the sample or back fluoresced light emitted by the sample,
and comprising drive means for displacing the focusing-detecting unit.

The drive means may be provided for changing the position of the focal plane in the course of depth focusing. Alternatively auxiliary drive means are provided for displacing the at least one optical element of the focusing means for changing the position of the focal plane in the course of depth focusing; or accousto-optical deflecting means are provided for changing the position of the focal plane in the course of depth focusing.

Depth focusing may be performed by the inventive laser scanning microscope either by using the common drive means of the focusing-detecting unit for changing the position of the microscope's focal plane or by providing an additional auxiliary drive means for displacing one or more optical elements of the focusing means (e.g. the objective and/or focusing lenses) within the focusing-detecting unit. Such an auxiliary drive means may be a piezo-positioner provided for displacing the objective (and/or focusing lenses).

For the purpose of 3D scanning the inventive microscope may preferably be used in combination with the above described technologies allowing for the continuous motion of either the focusing-detecting unit via the main drive means or the focusing optical element (e.g. objective) via the auxiliary drive means.

In a second aspect the invention provides a method for scanning a sample along a 3D trajectory using a laser scanning microscope having
a focusing-detecting unit comprising:
- focusing means having a focal plane and having at least one optical element for focusing a laser beam, and
- detector means for detecting light reflected from the sample or back fluoresced light emitted by the sample,

- drive means for displacing the focusing-detecting unit means; the drive means being further provided for changing the position of the focal plane in the course of depth focusing, or the microscope being provided with auxiliary drive means for displacing the at least one optical element of the focusing means for changing the position of the focal plane in the course of depth focusing; and
- deflecting means for deflecting the laser beam,
the method comprising the steps of:
- providing a periodical drive signal for the drive means or the auxiliary drive means for changing the position of the focal plane,
- obtaining time dependant displacement data of the at least one optical element of the focusing means in response to the periodical drive signal,
- providing a response function using the time dependant displacement data, and
- calculating a drive signal for the deflecting means using the response function to move the focal volume of the laser beam along the 3D trajectory within the sample.

Further advantageous embodiments of the invention are defined in the attached dependent claims.

Further details of the invention will be apparent from the accompanying figures and exemplary embodiments.
Fig. 1 is a schematic diagram of a prior art laser scanning microscope.
Fig. 2 is a schematic diagram of a laser scanning microscope according to the invention.
Fig. 3 is a schematic diagram of another embodiment of a focusing-detecting unit of the laser scanning microscope according to the invention.
Fig. 4 is a schematic diagram of a further embodiment of a focusing-detecting unit the laser scanning microscope according to the invention.
Fig. 5 is a schematic diagram of another embodiment of the laser scanning microscope according to the invention.
Fig. 5a is an enlarged view of a sample under the objective of the microscope of Fig. 5.
Fig. 6 illustrates a theoretical response function of a drive means carrying the microscope objective and the real response function of the drive means to a sinusoidal drive signal at two different frequencies.
Fig. 7a is a diagram of the response function of the objective drive means.
Fig. 7b is a diagram illustrating a 3D scanning trajectory.
Fig. 7c is a diagram illustrating the calculated X-Y trajectory as a function of time.
Fig. 8a is a top view of a stage comprising a grid.
Fig. 8b is a side view of the grid of Fig. 8a with a sample supported thereupon.
Fig. 9 is a schematic diagram of an alternative embodiment of a focusing means in a laser scanning microscope according to the invention.

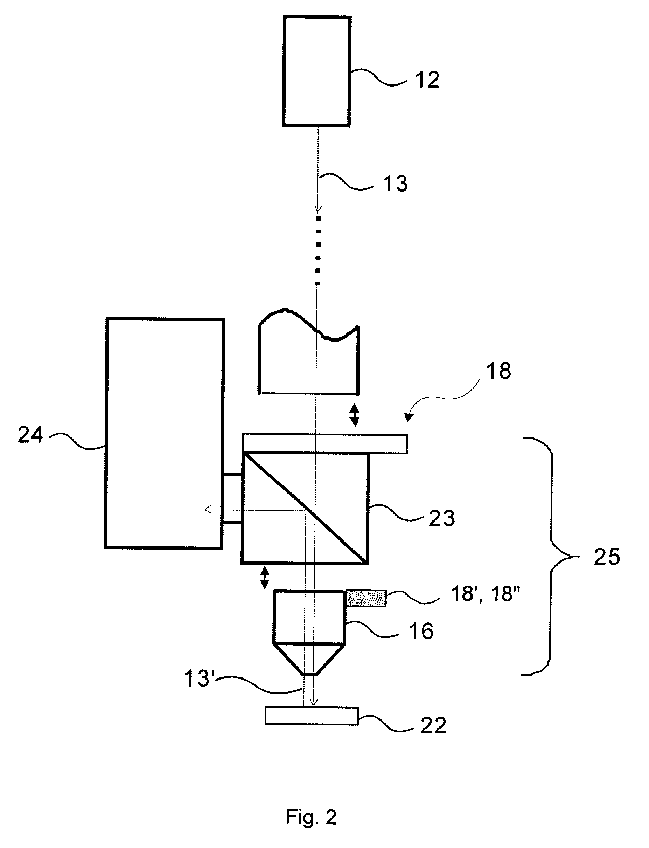

Fig. 2 is a schematic diagram illustrating an embodiment of a laser scanning microscope 10 according to the invention. The inventive microscope 10 comprises a laser source 12 providing a laser beam 13 which is focused onto a sample 22 (e.g. a biological specimen) via focusing means 15, in this case a microscope objective 16. In order to perform depth focusing a drive means 18 is provided for displacing the microscope objective 16 relative to the sample 22. Optical means such as beam splitter 23 is arranged along the optical path of the scanning laser beam 13 for directing the reflected light 13' (which is understood to comprise both the laser beam reflected back from the sample 22 and the back fluoresced light as the case may be) to a suitable detector 24. In contrast to the prior art solution where the objective 116 is displaced via the drive means 118 independently from the detector 124, in the inventive microscope 10 both the objective 16 and the detector 24 are connected to the drive means 18 such that the drive means 18 may simultaneously displace the detector 24 with the objective 16. Thus in the illustrated embodiment the objective 16, the detector 24 and the beam splitter 23 form a focusing-detecting unit 25 which can be displaced via the drive means 18 as a single unit.

The drive means 18 may be based on any conventional optomechanical solution for lifting and lowering the focusing-detecting unit 25 as well as for modifying the position of the focal plane within the sample, e.g. electromagnetic positioning of the optical parts, mechanical step motor drives, resonant driving of optical elements mounted on springs, or piezo devices may be used or a modified imaging system objective can be used, wherein only one small lens is moved within the objective, whereby the working distance of the objective (i.e. the position of the focal plane) can be changed without having to move the whole mass of the objective.

It is to be understood that a number of further focusing elements and optical guiding elements such as mirrors, lenses, beam deflectors, etc. may be arranged along the optical path of the scanning laser beam 13 between the laser source 12 and the optical means for directing the reflected light 13' to the detector 24.

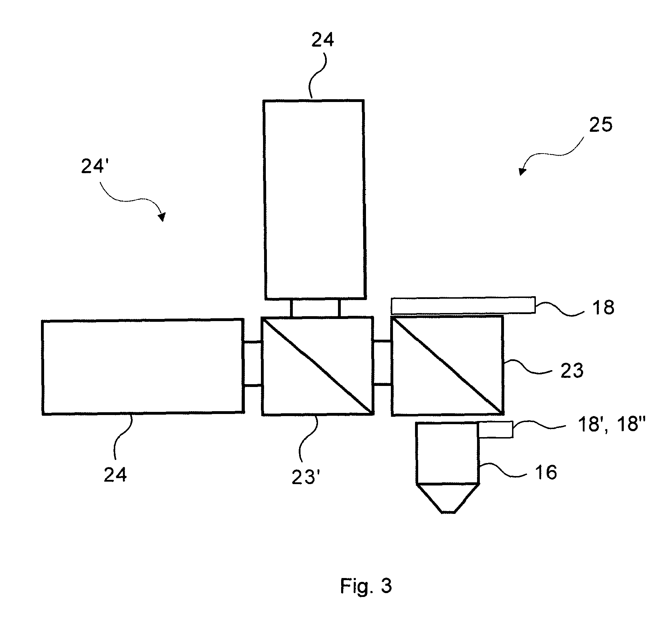

Fig. 3 illustrates another preferred embodiment of the focusing-detecting unit 25 of the laser scanning microscope 10 according to the invention. This embodiment differs from the embodiment illustrated in Fig. 2 in that it is provided with detector means 24' comprising two separate detectors 24. Reflected or back fluoresced light directed to the detector means 24' via the first beam splitter 23 is further divided by a second beam splitter 23' which is interposed between the two detectors 24. The separate detectors 24 are preferably provided with filter means for detecting photons of different electromagnetic properties such as wavelength or polarisation. For example the detectors 24 may be equipped with appropriate wavelength filters serving as filter means for detecting photons of only a specific wavelength. By using two different wavelength fluorescent markers two different measurements may be performed simultaneously. It may also be advantageous to have separate wavelength channels for detecting different wavelength laser beams 13 simultaneously sweeping the sample 22 along different XY paths.

The second beam splitter 23' may itself serve as the filter means, e.g. it may be a wavelength selective beam splitter reflecting or transmitting only specific wavelengths, thereby the wavelength separation of the photons can be performed by the beam splitter 23'. In yet another possible application the detectors 24 may be provided to detect different polarisation light, in this case the filter means may be suitable polarising filters arranged before each detector 24, or the second beam splitter 23' may be a polarising beam splitter.

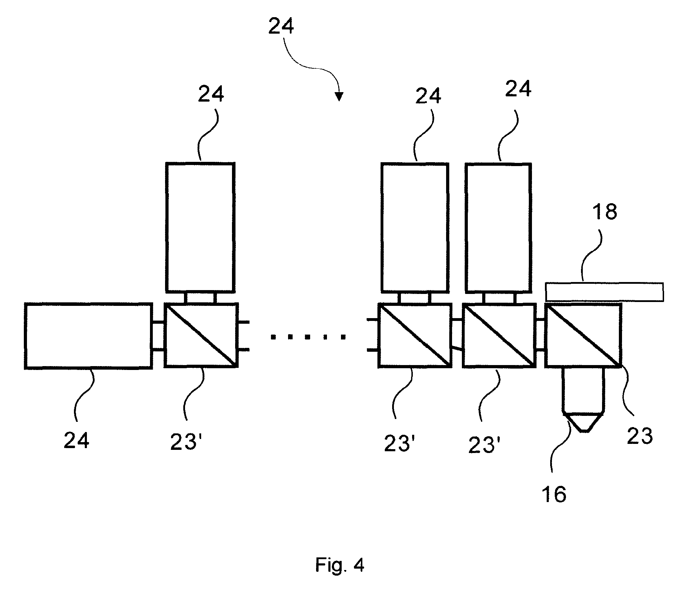

The number of detectors 24 is not limited to two. Any number of detectors 24 may be used in cascade e.g. as in the detector means 24' illustrated in Fig. 4.

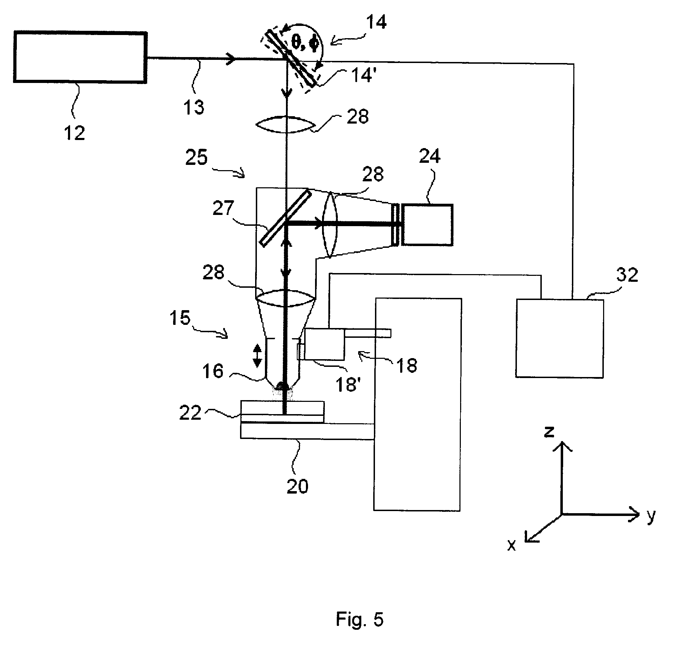

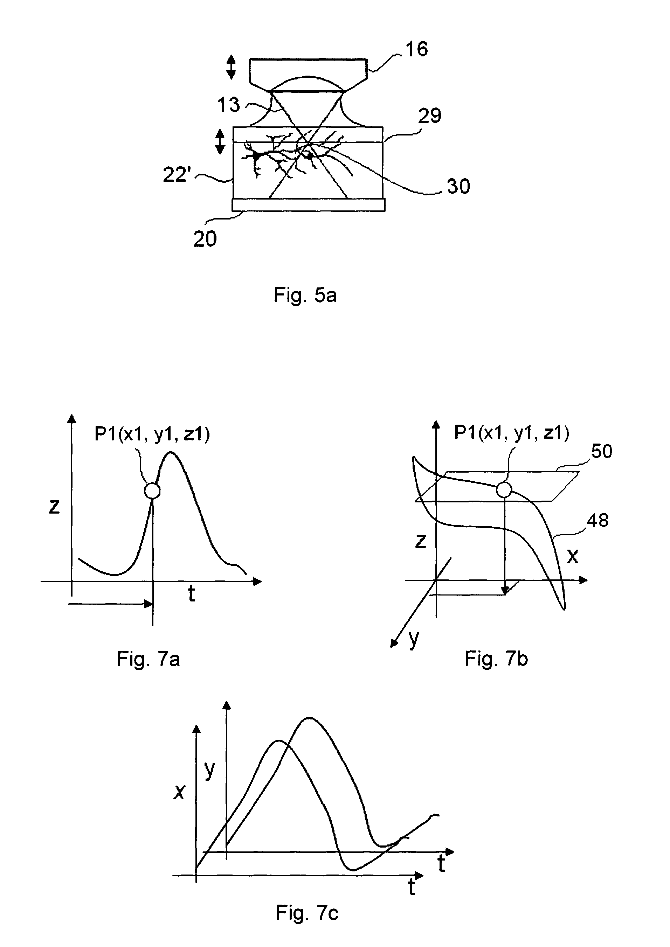

Fig. 5 is a schematic diagram illustrating another embodiment of a laser scanning microscope 10 according to the invention. The microscope 10 comprises a laser source 12 providing a laser beam 13; beam deflecting means 14 for deflecting the laser beam 13 in X and Y directions; focusing means 15, in this case a microscope objective 16; drive means 18 for displacing a focusing-detecting unit 25 parallel to the optical axis of the objective 16; a sample stage 20 for holding or supporting a sample 22 (e.g. a biological specimen 22') under the objective 16; and a detector 24.

In the embodiment illustrated in Fig. 5 depth scanning is achieved using the known two-photon (or multi-photon) laser excitation technology. It is to be noted however, that any other technology allowing for scanning at various focal depths, e.g. confocal microscope technology, could be applied in connection with the present invention.

For the purpose of two-photon laser excitation the laser source 12 can be a femtosecond impulse laser, e.g. a mode-locked Ti-sapphire laser providing the laser beam 13 In such case the laser beam 13 is made up of discrete laser impulses of MHz repetition rate and femtosecond impulse width.

In the embodiment illustrated in Fig. 5 a dichroic mirror 26 is arranged along the optical path of the laser beam 13 to separate the laser beam 13 provided by the laser source 12 from the fluoroscence photons emitted by the excited fluorophores of the sample 22 under examination, and to direct the later to the detector 24. Any suitable detector 24 can be used, e.g. a photo multiplier, to detect the emitted photons. The detector 24 may advantageously be suitable for time correlated photon counting or fluorescence lifetime imaging In this case time correlated means that the detector's time resolution is fast enough to measure the exact time of impact the fluorescent photons reaches its surface, therefore various delay information can be extracted from such measurements. For example in FLIM the elapsed time between excitation and emission is measured, which serves as an important signal at certain fluorescent probes.

Also, more than one detectors 24 provided with appropriate wavelength filters (or other filter means for separating photons based on any other electromagnetic property, such as polarisation) can be arranged in a known way as explained above if emitted photons of different properties (e.g. wavelengths) are to be detected separately.

The deflecting means 14 can be any suitable beam deflecting devices, such as accousto-optical or electro-optical deflectors, galvanometric scanning mirrors 14' (mirrors mounted on galvanometric scanners configured to deflect the laser beam 13 in X and Y directions for scanning within a given focal plane), etc.. Additional optical guide means such as lenses 28 or mirrors (e.g. spherical mirrors guiding the laser beam 13 onto and between the scanning mirrors 14') can be provided to create a desired optical path and to hinder divergence of the laser beam 13.

For the sake of better visibility the microscope objective 16 and the detector 24 are depicted spaced apart from each other, however the microscope objective 16 and the detector 24 form a single focusing-detecting unit 25, which is mounted on the drive means 18, which may be a mechanical step motor drive or other suitable device as explained above. Although Fig. 5 presents lenses 28 and the dichroic mirror 27 as being part of the focusing-detecting unit 25, it is to be understood that some of these elements may be omitted or replaced by other suitable optical means, e.g. the beam splitter 23 illustrated in Fig. 2 to 4.

Drive means 18 may serve to set the Z position of the focal plane 29 of the objective 16, or an auxiliary drive means (not illustrated) may be provided within the focusing-detecting unit 25 for oscillating the objective 16 independently from the rest of the focusing detecting unit 25. This is particularly advantageous in the case of 3D laser scanning microscopes 10, wherein the 3D scanning is performed by continuously oscillating the focal plane 29 of the microscope 10 relative to the sample 22. The following example relates to such a 3D laser scanning microscope 10, however, it should be appreciated that Z focusing may be performed by shifting the whole of the focusing-detecting unit 25 via the main drive means 18.

The auxiliary drive means 18" is preferably a piezo-positioner 18' capable of providing very fast micro- and even nano-scale displacements, but optionally other types of suitable devices can be used as well, as explained in connection with the main drive means 18.

As can be seen in Fig. 5a when the objective 16 is displaced along its optical axis (i.e. in the Z direction) the focal plane 29 of the objective 16 is shifted relative to the sample 22 (depicted as a biological specimen 22'), thus the focus spot 30 (i.e. the focal volume of the laser beam 13) can be moved in the Z direction.

A control system 32 is provided for controlling the beam deflecting means 14, and in the present embodiment the piezo-positioner 18' being generally the auxiliary drive means 18" of the objective 16 or the drive means 18 of the focusing-detecting unit 25 if no auxiliary drive means 18" is provided. The control system 32 can be a single unit, e.g. a computer or a microcontroller, or it can comprise a plurality of interrelated control units separately controlling components of the microscope 10, such as the piezo-positioner 18' and the deflecting means 14. In the latter case a main control unit can be provided for obtaining data (such as position feedback information) from the other control units, for analysing such data and for sending back appropriate control signals to the control units. The control system 32 can be a built-in unit of the microscope 10 or it can be a separate device or a control software running on a separate device such as a computer program running on a separate computer.

Scanning the sample along a 3D trajectory is carried out in the following way.

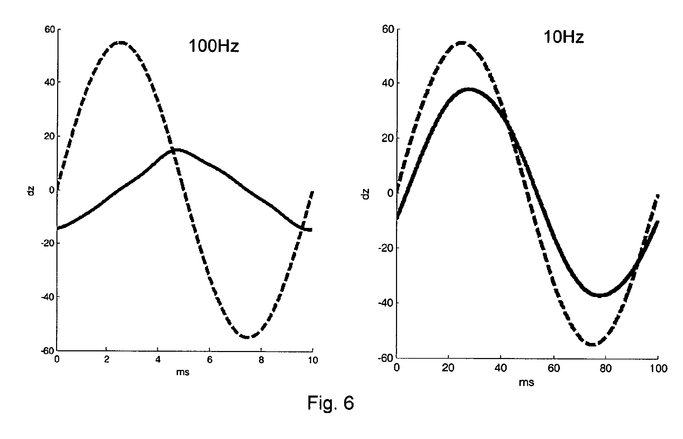

First, the microscope 10 is calibrated for a desired Z-frequency (i.e. the scanning frequency in the Z direction). For example a sinusoidal voltage signal (or any other periodical signal) of the desired Z-frequency and amplitude is provided by the control system 32 as drive signal for the piezo-positioner 18', which induces mechanical oscillation of the focusing-detecting unit 25 comprising the microscope objective 16 along its optical axis (in the Z direction). The displacement of the objective 16 in response to the sinusoidal drive signal can be obtained in any conventional manner, e.g. by an external measuring device or e.g. using the position feedback signal of the piezo-positioner 18'. A response function z(t) is calculated from the time dependant displacement by the control system 32. Fig. 6 illustrates the obtained response function z(t) and a theoretical response function z'(t) corresponding to the displacement of an ideal piezo-positioner (zero mass, instantaneous response to a voltage change, etc.) at two different drive signal frequencies: a 10 Hz and 100 Hz. As can be seen the amplitude of the real response function z(t) is reduced and its phase is shifted. The amplitude reduction can be compensated for by increasing the amplitude of the drive signal (the voltage signal) and the phase shift can be taken into account without difficulty. However, as the applied Z-frequency is increased (see the diagram showing the 100 Hz drive signal frequency) the shape of the resulting response function z(t) starts to deviate from the shape of the drive signal (and the theoretical response function z(t)). In case of a sinusoidal drive signal the increase in the Z-frequency results in a less and less sinusoidal response function z(t), which cannot be compensated for at the level of the drive signal.

The focal plane 29 of the objective 16 is at a given distance relative to the objective 16, thus it moves together with the objective 16 and the piezo-positioner 18'. Hence, the response function z(t) is suitable for describing the position of the focal plane 29 since a simple linear relationship can be established between the two. For the sake of simplicity hereinafter the response function z(t) is considered to correspond to the time dependant position of the focal plane 29 of the objective 16.

It was found that the response function z(t) to a periodical signal (e.g. the above discussed sinusoidal signal) becomes stable after sufficient periods of the drive signal rendering the response function z(t) suitable for calibrating the microscope 10. For example in the case of a sinusoidal drive signal 50-100 periods were found to be sufficient to obtain a reliable z(t) function for calibration purposes.

The method according to the invention is based on the idea of generating a corresponding drive signal for the deflecting means 14, which takes the shape distortion of the stable response function z(t) of the auxiliary objective drive means 18" (e.g. the piezo-positioner 18') into account.

Figs. 7a to 7c illustrate how such XY drive signal can be generated by the control system 32. Fig. 7a is a diagram showing the Z position of the objective 16 as a function of time within a single oscillation period after the oscillation has become stable. Fig. 7b is a diagram illustrating a 3D scanning trajectory 48 passing through a plurality of scanning planes 50, i.e. the planes at different Z depths within the sample 22 where scanning is to be performed. The trajectory 48 is made up of scanning positions P (practically micro-volumes), which can be described by (x, y, z) coordinates. When wishing to scan a P1(x1, y1, z1) position lying in a given scanning plane 50 the following steps are performed by the control system 32. First, using the z(t) response function (which is understood to correspond to the time dependant position of the focal plane 29 of the objective 16), a t1 time (instant) is determined when the focal plane 29 of the objective 16 will be at z(t1)=z1 height (i.e. the height where the focal plane 29 will coincide with the desired scanning plane 50), then an XY drive signal is generated for the deflecting means 14 to direct the focus spot 30 of the beam 13 to (x1, y1) position at the determined t1 time. The same calculation can be carried out for the whole of the 3D trajectory and the XY drive signal illustrated in Fig. 7c is generated. It should be noted that there can be an infinite number of t1 instances when the objective 16 is at z1 height since the drive signal of the piezo-positioner 18' is a periodical function. If the scanning Z-frequency is high and there are too many scanning positions in some scanning planes 50 to be scanned within one oscillation period, then each such position may be scanned in a separate oscillation period.

The above described method allows for the use of high Z-frequencies, e.g. in the range of 50-200 Hz permitting very fast 3D scanning of samples 22 in which only a fraction of the whole area of the scanning planes 50 is of interest. This is particularly useful where a large number of measurements need to be carried out on such a sample 22 under different environmental conditions, e.g. on a biological specimen 22 under different types of stimulations.

A further advantage of the present invention is that the above described method does not compromise the XY resolution.

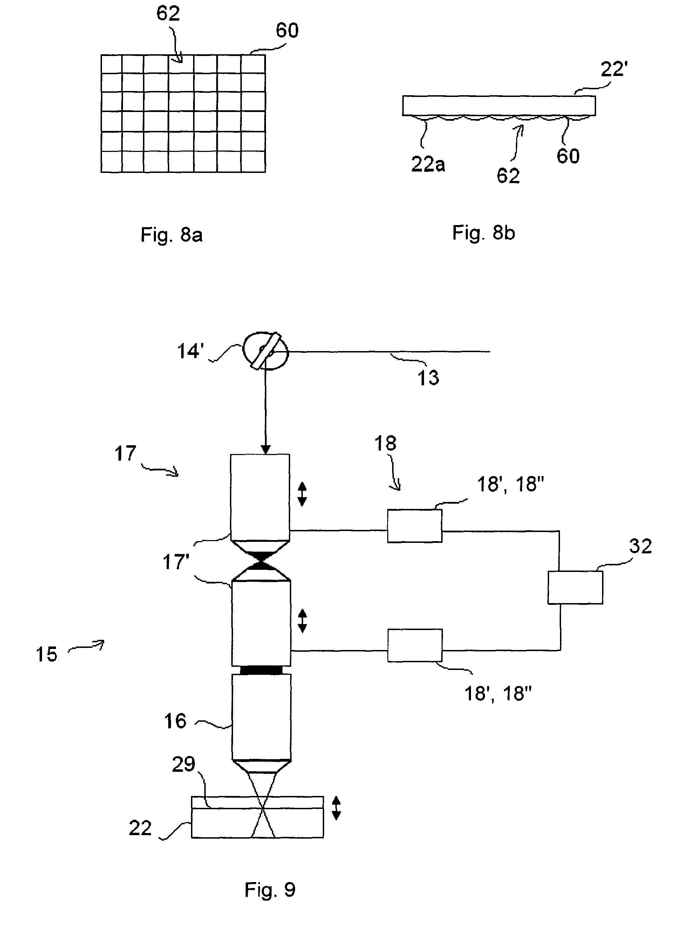

Prior art laser scanning microscopes generally comprise a glass stage or other smooth-surfaced stages. However, with the use of high Z-frequencies a new problem arises: the vibrations of the oscillating objective 16 (or the focusing-detecting unit 25 as the case may be) can be transmitted to the stage 20 via the mechanical connections of the microscope 10 or the medium (gas or liquid) between the objective 16 and the sample 22. Thus simply placing the sample 22 on a prior art glass stage might not be sufficient to keep the sample 22 in position as the vibration of the stage 20 can cause slight displacement of the sample 22 during the measurement. Such displacements could render the measurement useless as the volumes of interest of the sample 22 could leave the pre-calculated scanning trajectories 48. It is therefore suggested to provide the inventive scanning microscope 10 with securing means for fixing the position of the sample 22 during the measurement. Such securing means can be a stage 20 having a rough surface, preferably a surface with gratings, thereby the sample 22 - in particular a soft biological specimen 22' - can sink into the surface with the gratings pressing into the bottom of the specimen 22'. For example the stage 20 can be formed as a grid 60 (Fig. 8a), e.g. a metal grid or a grid of a suitable hard polymeric material. As illustrated in Fig. 8b the biological specimen 22' sits firmly on the grid 60 as parts of its bottom surface 22a sink into the mesh spaces 62, while the grid 60 itself presses into the bottom surface 22a of the specimen 22' thereby securing the specimen 22' in its position.

Apart from the better sample-retaining properties of the grid 60 as compared to the prior art smooth-surfaced stages, the grid 60 has a further advantage when imaging living biological specimens 22', which need to be kept in a special physiological solution. The objective 16 is preferably a water immersion objective (as illustrated in Fig. 5a) and the living specimen 22' is immersed in the physiological solution, preferably circulated around the specimen 22'. The use of a grid 60 as the stage 20 provides the extra advantage of allowing the living specimen 22' to be in contact with the physiological solution at its bottom surface 22a as well through the mesh spaces 62 of the grid 60.

Fig. 9 illustrates a further embodiment of a scanning microscope 10 according to the invention. In this embodiment the focusing means 15 comprises more than one optical elements: an objective 16 and a number of lenses 17' making up a lens system 17. Instead of, or in addition to displacing the objective 16 via the auxiliary drive means 18" it is also possible to change the position of the focal plane 29 within the sample 22 by displacing one or more other optical elements, via one or more auxiliary drive means 18". For example one or both lenses 17' of the depicted lens system 17 may be provided with electromagnetic positioners as auxiliary drive means 18", which may be controlled by the control system 32 of the scanning microscope 10. The electromagnetic positioners 18" can be any conventionally used electromagnetic linear drive mechanism. Furthermore, any other suitable auxiliary drive means 18" can be used as well, e.g. piezo-positioners, step motor drives.

For the purpose of performing the inventive method the auxiliary drive means 18" can be provided by the calculated compensated drive signal, and one or more lenses 17 may be oscillated independently.

It is also possible to provide phase shifted drive signals for each auxiliary drive means 18" of the different optical elements, which are to be oscillated for the purpose of changing the position of the focal plane 29 of the focusing means 15. This allows for additional ways of compensating for deviation of the shape of the response functions z(t) from the drive signals. For example the drive signals of two optical elements - such as the two lenses 17' - may be in opposite phase to each other.

In this case the objective 16, the lens system 17 and the detector 24 can all be connected to a common main drive means 18 which allows for the lifting and lowering of the focusing-detecting unit 25 when the sample 22 is to be inserted or removed from under the objective 16. Thereby the advantage of shortening the optical path between the objective 16 and the detector 24 (or detector means 24') can be achieved by eliminating the extensively large gap 101 in comparison with the prior art microscope 100 (illustrated in Fig. 1) since the amplitude of the oscillation applied for the purpose of the 3D scanning is in the mm or µm range, while the prior art gap 101 for changing the sample 122 under the microscope objective 116 is about 30-40 mm wide.

It is to be noted that it is also possible to provide an auxiliary drive means 18" for oscillating the objective 16 in the embodiment illustrated in Fig. 5 as explained above, while the common drive means 18 serves to lift and lower the whole of the focusing-detecting unit 25. This has the further advantage that when oscillating the objective for the purpose of 3D scanning higher frequencies may be used since the detector does not need to oscillate together with the objective 16.

It is also possible to provide accousto-optical deflecting means for changing the Z-position of the focal plane 29 in the course of depth focusing in which case no auxiliary drive means 18" are needed and 3D scanning can be based entirely on accousto-optical techniques. In this case the deflecting means 14 may comprise the accousto-optical deflectors for 3D scanning. Alternatively fluid lenses and/or zoom optics may be provided, which are suitable for changing the divergence of light, thus changing the focal plane 29 of the objective 16 without physically moving it thus suitable for random accessing points in a 3D volume.

Although the above described embodiments relate to an upright microscope, it will be apparent for the skilled person that the common drive means 18 for the focusing-detecting unit 25 can be applied in an invert microscope as well. Moreover, the focusing-detecting unit 25 may be positioned at any angle, for example the microscope stage might be vertical (e.g. when examining biological tissue slices attached to a sample slide) in which case the focusing-detecting unit 25 comprising the objective 16 and the detector 24 can be displaced horizontally.

The above-described embodiments are intended only as illustrating examples and are not to be considered as limiting the invention. Various modifications will be apparent to a person skilled in the art without departing from the scope of protection determined by the attached claims.

## Claims

1. Laser scanning reflection or fluorescent microscope (10) for scanning a sample, the microscope comprising a focusing-detecting unit (25) having:
• focusing means (15) having a focal plane (29) and having at least one optical element for focusing a laser beam (13), and
• detector means (24') for detecting light (13') reflected from the sample or back fluoresced light (13') emitted by the sample;
and comprising drive means (18) for displacing the focusing-detecting unit (25).

2. The laser scanning microscope according to claim 1, wherein the drive means (18) is provided for changing the position of the focal plane (29) in the course of depth focusing; or wherein auxiliary drive means (18") are provided for displacing the at least one optical element of the focusing means (15) for changing the position of the focal plane (29) in the course of depth focusing; or wherein accousto-optical deflecting means are provided for changing the position of the focal plane (29) in the course of depth focusing.

3. The laser scanning microscope according to claims 1 or 2, wherein the microscope (10) is a multi-photon laser scanning microscope or a confocal laser scanning microscope.

4. The laser scanning microscope according to any of claims 1 to 3, wherein the detector means (24') is suitable for time correlated photon counting or fluorescence lifetime imaging.

5. The laser scanning microscope according to any of claims 1 to 4, wherein the focusing means (15) comprises an objective (16) as optical element

6. The laser scanning microscope according to any of claims 1 to 5, wherein the drive means (18) comprises a piezo positioner (18') and/or a mechanical actuator and or an electromagnetic positioner.

7. The laser scanning microscope according to any of claims 1 to 6, wherein the detector means (24') comprises at least two detectors (24) having filter means for selectively detecting refracted or back fluoresced light (13') according to an electromagnetic property of the light (13').

8. The laser scanning microscope according to claim 7 wherein the filter means comprises wavelength filters arranged before the detectors (24) or at least one wavelength selective beam splitter arranged before the detectors (24) or at least one polarising beam splitter.

9. The laser scanning microscope according to any of claims 1 to 8, wherein the laser scanning microscope further comprises deflecting means (14) preferably comprising galvanometric scanning mirrors (14') or accousto-optical deflectors.

10. The laser scanning microscope according to any of claims 1 to 9, wherein the sample (22) is a biological specimen (22') and the microscope further comprises securing means for fixing the position of the biological specimen (22') in the form of a support grid (60) having mesh spaces (62) through which the biological specimen (22') can be nourished with a physiological solution.

11. The laser scanning microscope according to any of claims 1 to 10, wherein the microscope is an upright or an invert microscope.

12. Method for scanning a sample (22) along a 3D trajectory (48) **characterised by** using a laser scanning microscope (10) having
a focusing-detecting unit (25) comprising:
• focusing means (15) having a focal plane (29) and having at least one optical element for focusing a laser beam (13), and
• detector means (24') for detecting light (13') reflected from the sample or back fluoresced light (13') emitted by the sample,
- drive means (18) for displacing the focusing-detecting unit means (15); the drive means (18) being provided for changing the position of the focal plane (29) in the course of depth focusing, or the microscope (10) being provided with auxiliary drive means (18") for displacing the at least one optical element of the focusing means (15) for changing the position of the focal plane (29) in the course of depth focusing; and
- deflecting means (14) for deflecting the laser beam (13),
the method comprising the steps of:
- providing a periodical drive signal for the drive means (18) or the auxiliary drive means (18") for changing the position of the focal plane (29),
- obtaining time dependant displacement data of the at least one optical element of the focusing means (15) in response to the periodical drive signal,
- providing a response function (z(t)) using the time dependant displacement data,
- calculating a drive signal for the deflecting means (14) using the response function (z(t)) to move the focal volume (30) of the laser beam (13) along the 3D trajectory (48) within the sample (22).

13. The method according to claim 12, wherein a confocal laser scanning microscope (10) or a multi-photon laser scanning microscope (10) is used.

14. The method according to claims 12 or 13, comprising providing a sinusoidal voltage signal as the drive signal for the drive means (18) or the auxiliary drive means (18").

15. The method according to any of claims 12 to 14, further comprising the step of placing a living biological specimen as sample (22) on a microscope stage (20) comprising a support grid (60) having mesh spaces (62) and nourishing the specimen (22) with a physiological solution through the mesh spaces (62).
